(19) Europäisches Patentamt / European Patent Office / Office européen des brevets

(11) **EP 4 122 978 A1**

(12) **EUROPEAN PATENT APPLICATION**

(43) Date of publication:
**25.01.2023 Bulletin 2023/04**

(21) Application number: **21186777.5**

(22) Date of filing: **20.07.2021**

(51) International Patent Classification (IPC):
**C08J 9/00** (2006.01)

(52) Cooperative Patent Classification (CPC):
**C08J 9/0061;** C08J 2205/052; C08J 2207/02;
C08J 2323/02; C08J 2323/06; C08J 2453/02

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Sekisui Alveo AG**
**6043 Adligenswil (CH)**

(72) Inventors:
 • **PALIKA, Satish**
  **4800 Zofingen (CH)**

• **CLAESSEN, Ton**
 **6031 EM Nederweert (NL)**
• **BERGER, Lukas**
 **6005 Luzern (CH)**
• **WILLEMSE, Remco Cornelis**
 **6004 DA Weert (NL)**
• **PELSERS, Raymond**
 **6042 AS Roermond (NL)**

(74) Representative: **Osha Liang**
 **2, rue de la Paix**
 **75002 Paris (FR)**

(54) **POLYOLEFIN-BASED CLOSED-CELL FOAMS**

(57)  A polyolefin-based closed-cell foam is shaped as a sheet having a thickness comprised in the range from 0.2 mm to 5 mm. The foam comprises a polyolefin composition comprising a first component L having a first relaxation time, $T_{2L}$, comprised in the range from 0.190 ms to 0.229 ms as measured by the pulsed NMR Hahn echo method at 25°C. The first component L is present in a first component ratio, l, of at least 5 %, as measured by the pulsed NMR Hahn echo method at 25°C.

**FIG.1**

EP 4 122 978 A1

**Description**

TECHNICAL FIELD

The present disclosure concerns, but is not limited to, a polyolefin-based closed-cell foam. The present disclosure also concerns a method for manufacturing such a foam, as well as the use of such a foam for controlling a response to a stress the foam may be subject to during the manufacture and/or post-manufacture steps and/or end-applications of the foam.

TECHNICAL BACKGROUND

Polymer-based foams may be subject to a number of deforming forces generating stresses during different stages of their manufacture and thereafter, during use. As a consequence, residual stresses may remain in the foam, which typically decrease the quality of the products made of the foam during post-processing steps and/or during end use of the foam in various applications.

The reduction of the residual stresses is thus necessary to maintain a desired quality of production and post-processing as well as the required standards in foam applications, such as for example in pressure sensitive adhesive applications using polyolefin-based foams as carrier to produce foam tapes, and their end application to achieve an adhesive bond between the foam tape and supports or layers on which the foam tape has to be applied.

In addition, with reference to foam tape production process, whenever deformations induced by residual deforming forces are not controlled to a desired extent, there will be adhesion and debonding issues between the foam and an adhesive layer. In particular, controlling deforming forces in thin foams with high density may be challenging because these foams have higher strengths and subject their adhesive layers to additional deforming forces.

For example, vertically foamed thin foams in roll form are known for their application as a carrier for adhesive in pressure sensitive adhesive tape applications. Since a vertical foaming process provides a smooth foam skin, additional layers can be brought in good surface contact with the foam surface. These thin foams are subject to substantial deformations during different stages of their manufacture, for example in the vertical foaming production process itself, but also in post-processing steps such as polymer layer lamination, surface treatment of foams to increase the surface energy, storage, adhesive layer lamination, winding and unwinding, as well as deformations in the final application due to deforming loads, or differential movements between substrates to name a few. The impact of deformation may be excessive in case of foams with a thickness in the range of 0.2 mm to 5 mm in combination with a foam density from 80 kg/m$^3$ to 250 kg/m$^3$.

This deformation problem is known also in case of crosslinked polyolefin-based foams produced via vertical foaming processes for foam tape applications. Within this context, foams obtained from conventional polyolefins have been developed. Such conventional polyolefin-based foams, which may be based on, for example, polyethylene or polypropylene, only absorb up to about 30% of force per unit area within specified time limits.

Foams produced via vertical foaming processes store substantial residual stresses when wound-up in roll form. The foam tries to release its residual stress imparted by the foaming process, which is however reduced only to a certain extent. However, the presence of residual stress in the roll, albeit partially reduced, nevertheless decreases the optimal execution of further processing and application steps where the foam roll is used, for example in adhesive tape applications, and also results in a negative impact on one or more mechanical properties. On the other hand, foams may release the deforming stresses to a larger extent than desired. In such cases, problems of strength loss or other quality-related issues may appear during the unwinding or feeding onto the rolls for any further process steps. Further, cleavage forces applied during post-processing (*e.g.*, unwinding a roll) or during an end use application of the foam (*e.g.*, removing a tape) may result in undesired quality issues for the foam if not adequately controlled.

Moreover, during the production of foams with higher densities, *i.e.,* from 80 kg/m$^3$ to 250 kg/m$^3$, the foam may be subject to more vertical deforming forces due to the weight of the sheet, thus giving rise to foam cells tendentially deformed in the direction of the vertical foaming. This leads to substantial internal buildup of forces per foam unit area, and to a substantial latent stress when the foams are wound up in roll form. Further, when the foam has a thickness of 5 mm or thinner, especially with thicknesses below 3 mm, the internal buildup of forces may be exacerbated. In certain situations, during the foaming process, the foam shaped as a sheet comes with folds from the foaming oven, which may be eliminated on purpose, in the direction of width, just prior to winding. The foam may be subject to deformations during the step of eliminating such folds, resulting in undesired buildup of forces per foam unit area. In further situations, at the end of a vertical foaming process, the foam has to wait in a buffer zone, hanging vertically before it can be wound into a roll. The foam is then subject to constant deformations in the vertical direction, resulting in much undesired residual buildup of forces per foam unit area.

Furthermore, when foams are crosslinked with a degree of crosslinking beyond a predetermined level, *e.g.,* above 20%, the foamed sheet may be subject to deformations which are carried into the wound-up roll and until the final product. Indeed, due to the crosslinked closed-cell structure of the foams, neighboring cell walls may be constrained, and a foam skin with closed-cell structure covers the foam core and restricts the deforming forces to remain within the foam core. Moreover, cell walls are also weakened due to the expansion during foaming process.

No polyolefin-based foam has been found that allows controlling all the above-mentioned latent stress or residual deforming stresses that are carried by the foam, while maintaining improved mechanical properties, such as for example cleavage strength holding factor (CHSF), short-term and long-term holding stress factors (HSFs), and initial holding stress.

GENERAL PRESENTATION

In what follows, the term "comprise" is synonym of (means the same as) "include" and "contain", is inclusive and open, and does not exclude other non-recited elements. Moreover, in the present disclosure, when referring to a numerical value, the terms "about" and "substantially" are synonyms of (mean the same as) a range comprised between 80% and 120%, preferably between 90% and 110%, of the numerical value.

One objective of the present disclosure is to develop a polyolefin-based foam which does not impair the optimal execution of the aforementioned processing steps (*e.g.,* unwinding, re-winding, surface treatment, application of a pressure sensitive adhesive layer directly or indirectly, by interposition of additional layer(s), to the foam), or the quality of the end product made of the foam, while maintaining a good balance of mechanical properties of the foam.

The inventors have surprisingly found that controllable reduction of deforming forces within a closed-cell polyolefin-based foam, including with time, is possible, thereby resulting in a foam maintaining balanced mechanical properties, such as for example cleavage strength holding factor (CHSF), and/or short-term and long-term holding stress factors (HSFs), and/or initial holding stress, and/or shrinkage. Further, a plurality of such mechanical properties may be achieved in the same foam product without one or more properties being sacrificed at the expense of improving another.

The inventors have shown that it is possible to produce foams of higher density which impart nonetheless less stress to the support or layer(s) to which they are applied. Controllable reduction of deforming forces both at the application of a strain and thereafter (*i.e.,* with time) has been successfully achieved by the inventors, also within broad temperature ranges, *e.g.,* from -25°C to 40°C. For example, the impact of vertical deformation forces during a vertical foaming process and/or the stress buildup accumulated during the manufacture of the foam, winding or unwinding steps, may be mitigated. In addition, desired mechanical properties of the foam for, *e.g.,* application in adhesive foam tapes, can also be obtained.

The inventors have shown that controlling the release of deforming forces within a polyolefin-based closed-cell foam may be achieved by selecting a relaxation time ($T_2$) greater than a predetermined value (e.g. greater than 0.190 ms as measured by the pulsed NMR Hahn echo method at 25°C) of at least one component making part of a polyolefin composition and a corresponding proportion in the polyolefin composition identified by a methodology based on Nuclear Magnetic Resonance (NMR), which is described below. Both the relaxation time and proportion may be measured by pulsed NMR. This has not been previously envisaged in the field of polyolefin-based foams.

Both the above-mentioned mechanical properties and the control of the release of deforming forces are provided by the foam according to the first aspect of the present disclosure.

The inventors have also shown that, according to one or more embodiments, components of the composition having a different degree of hardness as characterized by pulsed NMR methodology as well as the proportion of said components may be selected. For example, a soft component, a medium component and optionally a hard component may be selected, wherein the soft component has the longest relaxation time in the pulsed NMR measurement, the hard component, when present, has the shortest relaxation time in a pulsed NMR measurement, and the medium component has an intermediate relaxation time in the pulsed NMR measurement. This combination of components different in terms of relaxation time contributes to release the residual deforming forces within the foam in a controlled manner, while maintaining mechanical properties such as, for example, at least the holding stress factor (HSF), within selected ranges. A plurality or even all of the different desirable mechanical properties may be maintained in the same foam product, as described in further detail below.

According to a first aspect hereof, the present disclosure provides a polyolefin-based closed-cell foam shaped as a sheet having a thickness comprised in the range from 0.2 mm to 5 mm. The foam comprises a polyolefin composition comprising a first component L having a first relaxation time, $T_{2L}$, comprised in the range from 0.190 ms to 0.229 ms as measured by the pulsed NMR Hahn echo method at 25°C. The first component L is present in a first component ratio, 1, of at least 5 %, as measured by the pulsed NMR Hahn echo method at 25°C.

In the present disclosure, the term "closed-cell", referring to the polyolefin-based foam according to the first aspect, stands in contrast to "open-cell", and means that substantially all cell walls of the foam are undamaged. Preferably, at least 90% of the cells have undamaged cell walls, more preferably at least 95%, even more preferably more than 98%. The percentage or degree of closed cells is determined by the amount of water absorption in weight/volume % and weight % of foam submerged in water for a specified amount of time, according to the following test method. Three foam samples of dimensions 100x100mm are prepared. The dimensions of the samples (length, width, thickness) and their weight are determined as references. The samples are placed in specific baskets to hold them under water. A glass vessel is filled with deionized water and the baskets are placed within it. The samples are covered with a minimum of 3cm of water. The vessel is covered with a glass plate for the duration of the test. After 7 days in water the samples are removed and carefully dried with industrial paper and weighed. For example, the "Volume % water absorption" is calculated via the following formula: [(weight after - weight before)/(width x length x thickness)] x 100. When the cell walls are at least 90% undamaged, the Volume % water absorption is less than 2% and preferably about 1% or less.

According to one or more embodiments, the foam according to the first aspect is a roll foam, as opposed to a block foam, and meaning that the foam is in roll form, *i.e.,* is wound in the form of a roll. Such a roll foam may for example be suitable for adhesive tape applications, contrary to block foams, because it comprises foam in the shape of a sheet of suitable thickness and having a closed cell surface. For example, the foam may be shaped as a sheet having a thickness comprised in the range from 0.2 mm to 5 mm, and the wound-up sheet in the roll form may have a width comprised in the range from 0.5 m to 2 m, and a length comprised in the range from 100 m to 500 m. According to one or more embodiments, the foam is not a block foam, such as, *e.g.,* a chemically crosslinked foam obtained from a block foam process.

In the present disclosure, by "relaxation time $T_2$ of a component comprised in the foam", it is meant the $^1$H spin-spin relaxation time constant characterizing the signal decay of the mechanism by which the transverse component of the magnetization vector exponentially decays towards its equilibrium value in a nuclear magnetic resonance (NMR) measurement of the foam. In the present disclosure, by "component ratio", it is meant the percentage of protons of said component with respect to the total number of protons contained in the foam. In the present disclosure, depending on the nature of the component, its $T_2$ and its component ratio may be experimentally measured by two methods, the pulsed NMR Han Echo method or the pulsed NMR Solid echo method, which are further detailed in the detailed description.

The first relaxation time, $T_{2L}$, is comprised in the range from 0.190 ms to 0.229 ms as measured by the pulsed NMR Hahn echo method at 25°C. For example, according to one or more embodiments, $T_{2L}$ is comprised in the range from 0.200 ms to 0.213 ms.

The first component L is present in a first component ratio, 1, of at least 5 %, as measured by the pulsed NMR Hahn echo method at 25°C. According to one or more embodiments, the first component L is present in a first component ratio, 1, comprised in the range from 5 % to 30 %, as measured by the pulsed NMR Hahn echo method at 25°C. For example, the first component ratio, 1, may be comprised in the range from 5 % to 15 %. Alternatively, the first component ratio, 1, may be comprised in the range from 20 % to 30 %.

The foam is shaped as a sheet. The sheet has a thickness comprised in the range from 0.2 mm to 5 mm, for example comprised in the range from 0.6 mm to 3 mm, for example from 0.7 mm to 2 mm.

According to one or more embodiments, the polyolefin-based closed-cell foam has a density comprised in the range from 80 kg/m$^3$ to 250 kg/m$^3$, for example comprised in the range from 80 kg/m$^3$ to 210 kg/m$^3$. According to one or more embodiments, the density is for example comprised in the range from 100 kg/m$^3$ to 160 kg/m$^3$. According to one or more further embodiments, the density is for example comprised in the range from above 133 kg/m$^3$ to 250 kg/m$^3$, for example in the range from above 133 kg/m$^3$ to 210 kg/m$^3$, for example in the range from above 133 kg/m$^3$ to 160 kg/m$^3$.

According to one or more embodiments, the polyolefin-based closed-cell foam further comprises a second component M having a second relaxation time, $T_{2M}$, and optionally a third component S having a third relaxation time, $T_{2S}$, wherein each of $T_{2M}$ and $T_{2S}$ is lower than $T_{2L}$.

According to one or more embodiments, the second component M is present in a second component ratio, m, comprised in the range from 40 % to 70 %, and the third component S, when present, is present in a third component ratio, s, comprised in the range from 60 % to 90 %, and wherein the second component ratio, m, is measured by the pulsed NMR Hahn echo method at +25°C, and the third component ratio, s, is measured by the pulsed NMR Solid echo method at -25°C.

According to one or more embodiments, the polyolefin-based closed-cell foam further comprises a second component M having a second relaxation time, $T_{2M}$, wherein:

- $T_{2M}$ is comprised in the range from 0.03 ms and 0.05 ms; and/or
- the second component M is present in a second component ratio, m, comprised in the range from 40 % to 70 %;

wherein $T_{2M}$ and the second component ratio, m, are measured by the pulsed NMR Hahn echo method at +25°C.

According to one or more embodiments, the second relaxation time, $T_{2M}$, is comprised in the range from 0.032 ms to 0.039 ms. In alternative embodiments, the second relaxation time, $T_{2M}$, is comprised in the range from 0.043 ms to 0.047 ms.

According to one or more embodiments, the second component ratio, m, is comprised in the range from 60 % to 70 %, *e.g.,* from 65 % to 70 %. Alternatively, the second component ratio, m, may be comprised in the range from 50 % to less than 60 %.

According to one or more embodiments, the polyolefin-based closed-cell foam further comprises a third component S having a third relaxation time, $T_{2S}$, wherein:

- $T_{2S}$ is at least 0.0088 ms; and/or
- the third component S is present in a third component ratio, s, comprised in the range from 60 % to 90 %,

wherein $T_{2S}$ and the third component ratio, s, are measured by the pulsed NMR Solid echo method at -25°C.

According to one or more embodiments, the third relaxation time, $T_{2S}$, is comprised in the range from 0.009 ms and 0.0096 ms. According to one or more embodiments, the third relaxation time, $T_{2S}$, is comprised in the range from 0.0091 ms to 0.0095 ms.

According to one or more embodiments, the third component ratio, s, is comprised in the range from 70 % to 82 %.

According to one or more embodiments, when $T_{2S}$ and the third component ratio, s, are measured by the pulsed NMR Solid echo method at 0°C,

- $T_{2S}$ is at least 0.0088 ms, for example comprised in the range from 0.0090 ms and 0.010 ms; and/or
- the third component S is present in a third component ratio, s, comprised in the range from 45 % to 85 %, *e.g.,* from 50 % to 72 %.

According to one or more embodiments, the polyolefin-based closed-cell foam is obtained by crosslinking a polyolefin composition and vertically foaming the crosslinked polyolefin composition into a polyolefin-based sheet.

The polyolefin composition may be crosslinked according to any common technique, *i.e.,* by chemical or physical crosslinking. According to one or more embodiments, crosslinking comprises physical crosslinking, *e.g.,* by electron beam radiation or gamma irradiation, using for example a cobalt 60 source. Electron beam (E-beam) radiation may be used. However, chemical crosslinking, *e.g.,* by adding a crosslinking promoter, may also be envisaged according to one or more embodiments, either in combination with physical crosslinking or as an alternative.

According to one or more embodiments, the crosslinking percentage of the foam is comprised in the range from 20 % to 70 % as determined according to the following method, which is adapted from ASTM-2765, uses xylene as a solvent to dissolve non-crosslinked components, and allows determining a gel fraction (%), which corresponds to the "crosslinking percentage or crosslinking degree" in the present disclosure. The foam sample is cut and weights between 0.045 and 0.055 grams. Cuts or incisions are made to enlarge the surface of the foam allowing proper interaction of the solvent xylene with the non-crosslinked part of the foam. The prepared sample is then placed in a test tube which is filled with xylene. A stopper is placed on the test tube to hinder the evaporation of solvent. The test tube is then placed in an oil bath at 120°C for 24 hours. The non-crosslinked part of the sample then dissolves in xylene. An empty gel basket is weighed with an accuracy of 0.0001 gram as reference. The content of the test tube is then poured in the empty gel basket acting as a filter. The remaining content in the gel basket consists of crosslinked foam particles (hereby gel), and is then dried in a temperature oven at 100°C for 24 hours. This gel basket is then cooled down to room temperature, and weighed with an accuracy of 0.0001 gram. The gel fraction (%) is determined as follows: ((gel basket with gel in grams - empty gel basket in grams)/ weight of sample in grams) x 100%.

According to one or more embodiments, the crosslinking percentage of the foam is at least 20 %, for example comprised in the range from 20 % to 70 %. According to one or more embodiments, the crosslinking percentage is comprised in the range from 20 % to 50 %, *e.g.,* from 21 % to 45 %. Alternatively, the crosslinking percentage of the foam may be comprised in the range from 20 % to 70 %, *e.g.,* from 50 % to 60 %.

One manner to obtain a foam according to the first aspect of the present disclosure may consist in providing a foam obtained from a composition.

According to one or more embodiments, the polyolefin-based closed-cell foam as defined in reference to the one or more aforementioned embodiments of the first aspect of the present disclosure is shaped as a sheet and obtained from a composition comprising:

a first polymer resin present in a first mass fraction, x, with respect to the total mass of polymer resin comprised in said composition, the first polymer resin comprising a polyolefin;
a second polymer resin present in a second mass fraction, y, with respect to the total mass of polymer resin comprised in said composition, the second polymer resin comprising a thermoplastic elastomer;
at least one foaming agent; and
optionally, at least one additive.

The first polymer resin comprises a polyolefin resin. According to one or more embodiments, the polyolefin resin is a polyethylene resin, a polypropylene resin, an ethylene-vinyl acetate copolymer, or combinations thereof. According to one or more embodiments, the polyolefin resin is a polyethylene resin.

According to one or more embodiments, the polyethylene resin comprises a polyethylene resin obtained by polymerization catalyzed by a catalyst such as a Ziegler-Natta compound, a metallocene compound, and a chromium oxide compound. According to one or more embodiments, the catalyst is a metallocene compound.

According to one or more embodiments, the polyethylene resin comprises a linear low-density polyethylene. By using a linear low-density polyethylene, the obtained foamed sheet can have high flexibility and a reduced thickness. This linear low-density polyethylene (m-LLDPE) may be advantageously obtained by using a polymerization catalyst such as a metallocene compound. The linear low-density polyethylene may be obtained by copolymerizing ethylene (for example, 75% by mass or more, preferably 90% by mass or more with respect to the total amount of monomers) and an amount of $\alpha$-olefin. According to one or more embodiments, the $\alpha$-olefin is selected from the group comprising propylene, 1-butene, 1-pentene, 4-methyl-1-pentene, 1-hexene, 1-heptene, 1-octene, 1-nonene, and 1-decene. Among them, $\alpha$-olefins having 4 to 10 carbon atoms may be used.

According to one or more embodiments, the first polymer resin comprises a metallocene Linear Low-Density Polyethylene (m-LLDPE), obtained by copolymerizing ethylene with 1-octene, *i.e.,* a poly(ethylene-co-1-octene) copolymer. According to one or more embodiments, 1-octene is replaced by a branched octene, a combination of branched octenes, or a combination of linear octene (1-octene) with branched octene(s). According to one or more embodiments, the first polymer resin comprises an ethylene-based octene-1 plastomer (m-LLDPE, CAS nr: 26221-73-8), such as, *e.g.,* Queo 1007, Queo 0203, which are both produced by the company Borealis AG. According to one or more embodiments, the first polymer resin is selected from the group comprising Queo grades produced by Borealis AG, Olefinic block copolymers such as Infuse grades produced by Dow Chemical Company, or other polymers such as Affinity and Dowlex grades produced by Dow Chemical Co., Ltd., Exact grades produced by Exxon Chemical Co., Ltd., Supeer and Cohere grades produced by Sabic, Lumicene grades produced by Total. According to one or more embodiments, the first polymer resin comprises Queo 1007 or Queo 0203. According to one or more embodiments, the first polymer resin comprises or consists of Queo 1007. According to one or more embodiments, the ethylene-based octene-1 plastomer (m-LLDPE, CAS nr: 26221-73-8) has a density comprised between 860 kg/m$^3$ and 940 kg/m$^3$, as measured [at 23°C] according to ISO 1183, e.g., comprised in the range from 900 kg/m$^3$ to 940 kg/m$^3$, and a Melt Flow Rate (190°C/2.16 kg) comprised between 2.9 dg/min and 6.7 dg/min, as measured according to ISO 1183. According to one or more embodiments, the Melting Temperature (DSC) of the first polymer resin is at least 90°C, *e.g.,* at least 100°C, and for example comprised in the range from 100°C to 125°C, as measured according to ISO 11357-3. According to one or more embodiments, the first polymer resin is not based on Polypropylene. According to one or more embodiments, the first polymer resin is not based on an ethylene-vinyl acetate copolymer.

The second polymer resin comprised in the composition comprises a thermoplastic elastomer. According to one or more embodiments, the thermoplastic elastomer comprises a hydrogenated polystyrene-block-poly(ethylene-ran-butylene)-block-polystyrene copolymer. For example, the second polymer resin comprises a hydrogenated styrene butadiene thermoplastic elastomer (SEBS, CAS nr: 66070-58-4), such as, *e.g.,* S.O.E. S1609 produced by the company Asahi Kasei Corporation. According to one or more embodiments, the second polymer resin is selected from the group comprising Hydrogenated styrene butadiene block copolymers such as S1605, S1606, S1611 or S1609 produced by Asahi Kasei corporation, or Hydrogenated styrenic block copolymers such as 7119, 7318 produced by Kuraray. According to one or more embodiments, the first polymer resin comprises or consists of S1609. According to one or more embodiments, the hydrogenated styrene butadiene thermoplastic elastomer (SEBS, CAS nr: 66070-58-4) has a density comprised between 970 kg/m$^3$ and 1030 kg/m$^3$, as measured according to ISO 1183, and a Melt Flow Rate (190°C/2.16 kg) comprised between 2.2 dg/min and 2.8 dg/min, as measured according to ISO 1183. According to one or more embodiments, the second polymer resin has a glass transition temperature comprised in the range from 0°C to 50°C, for example comprised from 5°C to 45°C, *e.g.,* from 6°C to 26°C.

The first polymer resin is present in said composition in a first mass fraction, x, with respect to the total mass of polymer resin comprised in said composition. According to one or more embodiments, the first mass fraction x is comprised in the range from 10 wt% to 60 wt% with respect to the total mass of polymer resin comprised in said composition, for example comprised in the range from 15 wt% to 50 wt%, *e.g.,* from 20 wt% to 45 wt%.

The second polymer resin is present in said composition in a second mass fraction, y, with respect to the total mass of polymer resin comprised in said composition. According to one or more embodiments, the second mass fraction y is comprised in the range from 29 wt% and 70 wt% with respect to the total mass of polymer resin comprised in said composition, for example comprised in the range from 40 w% to 70 w%, *e.g.,* from 40 w% to 60 w%.

According to one or more embodiments, x is comprised between 20 and 60 wt% and y is comprised between 29 and 70 wt%.

According to one or more embodiments, the at least one foaming agent is an organic or inorganic chemical foaming agent or blowing agent having, for example, a decomposition temperature of about 130 °C to 270 °C.

Examples of the organic foaming agent include azo compounds such as azodicarbonamide, metal salts of azodicarboxylic acid (such as barium azodicarboxylate), azo compounds such as azobisisobutyronitrile, nitroso compounds such as N, N'-dinitrosopentamethylenetetramine, Examples thereof include hydrazine derivatives such as hydrazodicarbonamide, 4,4'-oxybis (benzenesulfonylhydrazide) and toluenesulfonylhydrazide, and semicarbazide compounds such as toluenesulfonyl semicarbazide.

Examples of the inorganic foaming agent include ammonium acid, sodium carbonate, ammonium hydrogen carbonate, sodium hydrogen carbonate, ammonium nitrite, sodium borohydride, anhydrous sodium citrate.

Among them, azo compounds and nitroso compounds may be used from the viewpoint of obtaining fine bubbles and from the viewpoints of economy and safety, and azodicarbonamide, azobisisobutyronitrile, N, N'-dinitrosopentamethylene may be used. Tetramine, and azodicarbonamide may be used. These pyrolytic foaming agents can be used alone or in combination of two or more.

The addition amount of the pyrolytic foaming agent is for example 1 to 30 parts by mass, *e.g.,* 2 to 15 wt% by mass with respect to the total mass of the composition, so that the composition can be foamed without bursting.

According to one or more embodiments, the composition comprises at least one additive selected from the group comprising color pigments, antioxidants, crosslinking agents, foaming agent activators, flames retardants. According to one or more embodiments, the composition does not comprise one or more of the following additives: physical foaming agents, peroxides, silanes, silicones, tackifiers, fillers, oils, expandable microspheres.

According to one or more embodiments, the composition comprising the first and second polymer resins and the at least one foaming agent further comprises an additive used as masterbatch. According to one or more embodiments, the additive comprises a polyolefin that may be the same or distinct from the polyolefin of the first polymer resin. Such an additive used as masterbatch may for example be selected from the group comprising LLDPE, LDPE, m-LLDPE, for example from LLDPE and m-LLDPE.

According to one or more embodiments, the composition further comprises a third polymer resin present in a third mass fraction, z, with respect to the total mass of polymer resin comprised in said composition, the third polymer resin comprising another thermoplastic elastomer.

According to one or more embodiments, the thermoplastic elastomer comprised in the third polymer resin comprises a styrenic block copolymer, for example a hydrogenated styrene-[ethylene-(ethylene-propylene)]-styrene block copolymer.

For example, the third polymer resin comprises a hydrogenated vinyl-bond rich styrene ethylene ethylene propylene styrene copolymer (SEEPS, CAS nr: 132778-07-5), such as, *e.g.,* Hybrar 7311 or 7311F produced by the company Kuraray. According to one or more embodiments, the third polymer resin is selected from the group comprising Hybrar 7125, Hybrar 7311, and Hybrar 7311F. According to one or more embodiments, the third polymer resin comprises of consists of Hybrar 7311. According to one or more embodiments, the hydrogenated, vinyl-bond rich styrene ethylene ethylene propylene styrene copolymer (SEEPS, CAS nr: 132778-07-5) has a density comprised between 880 kg/m$^3$ and 900 kg/m$^3$, as measured according to ISO 1183, and a Melt Flow Rate (190°C/2.16 kg) comprised between 0.45 dg/min and 0.55 dg/min, as measured according to ISO 1183. According to one or more embodiments, the third polymer resin has a glass transition temperature comprised in the range from - 40°C to 0°C.

The third polymer resin may be present in a third mass fraction, z, with respect to the total mass of polymer resin comprised in said composition. According to one or more embodiments, the third mass fraction z is comprised in the range from 14 wt% and 40 wt% with respect to the total mass of polymer resin comprised in said composition, for example comprised in the range from 15 wt% to 35 wt%, *e.g.,* from 20 wt% to 30 wt%. According to one or more embodiments, x is comprised between 20 and 50 wt%; y is comprised between 29 and 70 wt%; and z is comprised between 14 and 40 wt%.

According to another aspect, the present disclosure concerns a polyolefin-based closed-cell foam shaped as a sheet having a thickness comprised in the range from 0.2 mm to 5 mm, the foam being obtained from a composition as defined vide supra, *i.e.,* a composition comprising, at least:

said first polymer resin present in a first mass fraction, x, with respect to the total mass of polymer resin comprised in said composition, the first polymer resin comprising a polyolefin;
said second polymer resin present in a second mass fraction, y, with respect to the total mass of polymer resin comprised in said composition, the second polymer resin comprising a thermoplastic elastomer;
said at least one foaming agent;
optionally, said at least one additive; and
optionally, said third polymer resin present in a third mass fraction, z, with respect to the total mass of polymer resin comprised in said composition, the third polymer resin comprising another thermoplastic elastomer.

According to one or more embodiments, the polyolefin-based closed-cell foam according to the first aspect has one or more of the following mechanical properties a) to g), in any combination thereof:

a) cleavage strength holding factor (CSHF) at 25°C, at 100% cleavage strain of foam core, is comprised in the range from 0.45 to 0.7 (at t =15 to 600 seconds), wherein the foam core has a maximum cleavage strain of 200% to 400% at maximum cleavage strength, as measured according to the method described below, which is adapted from ASTM D1062-02.
b) short-term holding stress factor (HSF) at 25°C at 100% tensile strain is comprised in the range from 0.5 to 0.78 (at t = 15 to 600 seconds), wherein the initial holding stress at t = 15 seconds for 100% tensile strain is comprised in the range from 200 to 800 kPa, as measured according to the method described below, which is adapted from ISO 6914:2021.

c) long-term holding stress factor (HSF) at 25°C at 100% tensile strains is comprised in the range from 0.4 to 0.67 (at t = 15 to 28800 seconds), wherein the initial holding stress at t =15 seconds for 100% tensile strain is comprised in the range from 200 to 800 kPa, as measured according to the method described below, which is adapted from ISO 6914:2021.

d) initial holding stress at t = 15 seconds for 100% tensile strain, is comprised in the range from 200 kPa to 800 kPa at 25°C; from 800 kPa to 3000 kPa at 0°C; from 1700 kPa to 3000 kPa at -25°C, as measured according to the method described below, which is adapted from ISO 6914:2021.

e) 180° skin peel strength of 1 N/mm to 3.5 N/mm, as measured according to the method described below, which is adapted from AFERA 5001.

f) compression stress strain 25%, is comprised in the range from 30 to 200 kPa, as measured according to ISO-3386-1.

g) shrinkage of length and width at storage condition of 90°C during 24 hours is comprised in the range from 0.1% to 10%, as measured according to the method described below, which is adapted from ISO 2796-1986.

Details concerning the measurement methods of the above-mentioned Features a) to g) related to the mechanical properties of the foam are given below in the detailed description.

According to one or more embodiments, the polyolefin-based closed-cell foam has *all* the mechanical properties a) to g). The inventors have thus managed to obtain a polyolefin-based foam having all of these properties in balance. Such a foam had not been achieved yet, let alone for a polyolefin-based foam obtained by vertically foaming a polyolefin composition, since these properties tend to affect one another, *e.g.,* one property may affect the other negatively, resulting in trade-offs.

According to another aspect, the present disclosure concerns a polyolefin-based closed-cell foam, the foam being shaped as a sheet having a thickness comprised in the range from 0.2 mm to 5 mm, and the foam having one or more of the aforementioned mechanical properties a) to g), in any combination thereof.

According to another aspect, the present disclosure concerns a polyolefin-based closed-cell foam, the foam being shaped as a sheet having a thickness comprised in the range from 0.2 mm to 5 mm, and the foam having one or more of the aforementioned mechanical properties a) to g), in any combination thereof, wherein the foam comprises a polyolefin composition comprising a first component. The first component L is present in a first component ratio, 1, of at least 5 %, as measured by the pulsed NMR Hahn echo method at 25°C. According to one or more embodiments, the first component L is present in a first component ratio, 1, comprised in the range from 5 % to 30 %, as measured by the pulsed NMR Hahn echo method at 25°C. For example, the first component ratio, 1, may be comprised in the range from 5 % to 15 %. Alternatively, the first component ratio, 1, may be comprised in the range from 20 % to 30 %. According to one or more embodiments of this aspect of the present disclosure, the polyolefin composition may further comprise a second component M present in a second component ratio, m, and/or a third component S present in a third component ratio, s. According to one or more embodiments of this aspect of the present disclosure, the component ratios 1, m, s, may be defined in the same ranges as defined in one or more of the aforementioned embodiments in reference to the foam according to the first aspect of the present disclosure.

According to another aspect, the present disclosure concerns the use of a foam as defined in reference to any one of the aforementioned aspects of the present disclosure, for controlling a response of the foam to a stress the foam is subject to during the manufacture and/or post-manufacture steps and/or end-applications of the foam.

Controlling said response of the foam to a stress the foam is subject to may comprise controlling the release of residual deforming forces or latent forces, by avoiding or mitigating their occurrence or influence. According to one or more embodiments, the use comprises controlling the deforming forces applied to the foam when the foam is subject to a strain, for example a constant strain and/or an intermittent strain.

According to another aspect, the present disclosure concerns a method for manufacturing a polyolefin-based closed-cell foam comprising:

providing a polyolefin composition;
blending the polyolefin composition with at least one foaming agent;
forming a sheet, wherein the blending of the polyolefin composition with the at least one foaming agent is performed prior to and/or simultaneously with the forming;
crosslinking the sheet to at least 20 %; and
foaming the crosslinked sheet at a predetermined temperature to obtain a polyolefin-based closed-cell foam shaped as a sheet having a thickness comprised in the range from 0.2 mm to 5 mm.

According to one or more embodiments, the foaming is performed on a vertically arranged crosslinked sheet.

According to another aspect, the present disclosure concerns a method for manufacturing a foam as defined in any one of the above aspects, comprising a polyolefin composition and being shaped a sheet having a thickness comprised in the range from 0.2 mm to 5 mm.

According to one or more embodiments, the method for manufacturing a foam comprises the steps of:

- providing a first component L having a first relaxation time, $T_{2L}$, wherein:

  $T_{2L}$ is comprised in the range from 0.190 ms to 0.229 ms as measured by the pulsed NMR Hahn echo method at 25°C;

  the first component L is present in a first component ratio, 1, of at least 5 %, as measured by the pulsed NMR Hahn echo method at 25°C;

  and so that a long-term holding stress factor (HSF) at 25°C at 100% tensile strain is comprised in the range from 0.4 to 0.67 (at t = 15 to 28800 seconds), wherein the initial holding stress at t =15 seconds for 100% tensile strain is comprised in the range from 200 to 800 kPa, as measured according to the method described below in reference to Feature c), which is adapted from ISO 6914:2021.

According to one or more embodiments, the step of "providing" is further conditioned by the selection of one or more of the above defined mechanical properties a) to g) in the above-described selected ranges, in reference to the foam of the first aspect of the present disclosure.

According to another aspect, the present disclosure concerns a foam product for use in adhesive foam tape application, comprising:

- the foam as defined in reference to the embodiments of any one of the above aspects,
- a pressure sensitive adhesive layer in direct and/or indirect contact with the foam.

For example, according to one or more embodiments, the foam comprised in the foam product for use in adhesive foam tape application has *all* the aforementioned mechanical properties a) to g). This may result, for example, in a particularly suited foam product for bonding applications wherein any two surfaces are joined together with such a foam product. The foam may avoid carrying undesired residual deformations, and may also reduce new deformations or stresses to which the foam might be subject to during the life-time of the foam product, while maintaining a balance of the aforementioned mechanical properties a) to g).

According to one or more embodiments, the foam has a foam skin and a foam core, so that an adhesive layer, for example a pressure sensitive adhesive layer, may be put in direct and/or indirect contact with the foam skin and/or outer-layer of the foam, if present. In certain applications, when the aforementioned pressure sensitive adhesive has to make an excellent direct contact with foam skin and/or outer layer of the foam, it may be a prerequisite that the foam skin and/or outer layer of the foam has no cell openings on its surface and that the foam skin have more than 90% closed cells on the foam skin surface, more preferably at least 95%, and even more preferably more than 98% closed cells on the foam skin. The cell opening on the foam skin may for example be determined with the help of a high-resolution microscope, by measuring the content of open or closed cells, and in certain cases, by performing a roughness measurement on the surface of the foam.

Conventional foams, such as for example block foams which are produced *e.g.,* with chemical crosslinking agents and without using a vertical foaming process, are not preferred for adhesive foam tape applications, as they are produced in blocks of very high thickness (*e.g.,* 50 mm) which are further cut into foams of smaller thickness (*e.g.,* 28 mm, 48 mm), thereby creating open cells on the surface of the foam. Such block foams are generally preferred in, *e.g.,* shoes, yoga mats and packaging applications.

In contrast to block foams, the foam according to one or more of the aforementioned embodiments may find applications in pressure sensitive adhesive foam tapes (foam alone or foam with layers, which are coated or laminated with pressure sensitive adhesive (PSA) for single-side or double-sided tape application).

The foam according to one or more of the aforementioned embodiments may ultimately be used for the purpose of bonding in Building, Transportation (Automotive etc), Industrial, Medical, Appliances (refrigerators, washing machine, etc) and Construction applications to name a few. According to one or more embodiments, the foam according to one or more of the aforementioned embodiments does not find an application in shoe soles, *e.g.,* in in-soles.

Other features and advantages of the invention will become apparent from the following detailed description, taken in conjunction with the accompanying drawings, which illustrate, by way of example, the principles of the invention.

BRIEF DESCRIPTION OF THE DRAWINGS

In the drawings, like reference signs generally refer to the same or like parts throughout the different views.

The drawings are not necessarily to scale, emphasis instead generally being placed upon illustrating the principles of the invention.

FIG. 1 is a side perspective view of part of a production line of a foam manufactured by using an example of manufacturing method according to one or more embodiments of the present disclosure, including crosslinking and vertical foaming steps.

FIG. 2 is a schematic diagram of the internal structure of an example of foam according to one or more embodiments of the present disclosure.

FIG. 3 is a conceptual diagram illustrating the three-component analysis of the internal structure of a foam by pulsed NMR measurement.

DETAILED DESCRIPTION OF EXAMPLES

Examples of foams will now be described in detail with reference to the accompanying figures. In the following detailed description, numerous specific details are set forth in order to provide a more thorough understanding of the invention. However, it will be apparent to one of ordinary skill in the art that the invention may be practiced without these specific details. In other instances, well-known features have not been described in detail to avoid unnecessarily complicating the description.

The following description provides non-limiting examples of foams according to one or more embodiments of the present disclosure. The description further provides non-limiting details about methods for manufacturing examples of foams according to one or more embodiments of the present disclosure. Furthermore, details are provided about the measurement of relaxation times $T_2$ and ranges of components' ratios identified by a methodology based on pulsed NMR and applied to foams, as well as details about how to measure specific mechanical properties of the foams.

I. Example of a method for manufacturing a foam

According to one or more embodiments of the present disclosure, the polyolefin-based closed-cell foam is obtained by foaming a polyolefin-based material being shaped as a sheet. Such a polyolefin-based sheet may for example comprise at least one polymer layer including a polyolefin.

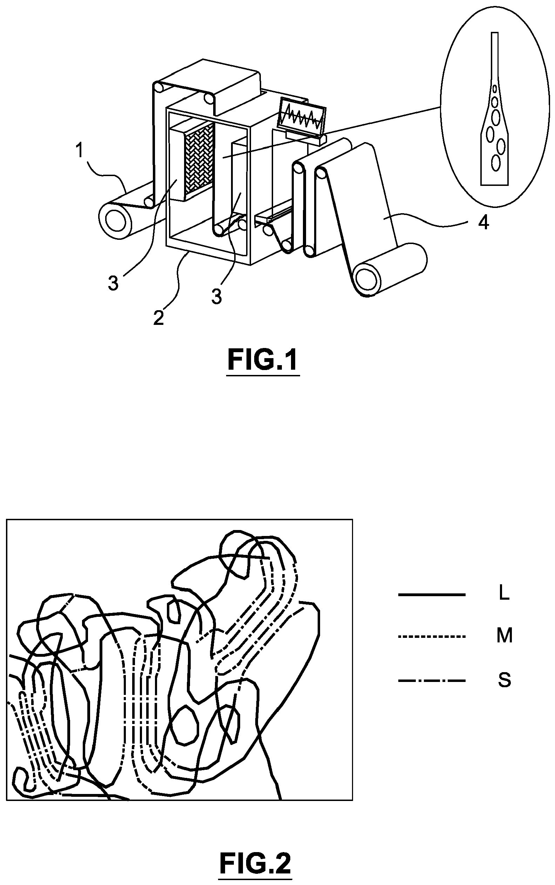

FIG. 1 is a side perspective view of part of a production line of a foam manufactured via an example of method according to one or more embodiments of the present disclosure, including steps of crosslinking and foaming. In this particular example, the polyolefin-based closed-cell foam is obtained by crosslinking a polyolefin composition and vertically foaming the crosslinked polyolefin composition into a polyolefin-based sheet. The method in this example further comprises a step of winding the foam into a roll.

In this example, the foam is obtained from a composition comprising a first polymer resin comprising a polyolefin, a second polymer resin comprising a thermoplastic elastomer, a foaming agent, and at least one additive. A sheet-like material may be formed from the composition, *e.g.,* by extrusion, either prior to mixing the composition's components or simultaneously. For example, the foaming agent may be added to the composition while extruding the composition. The extrusion may be performed with a twin-screw extruder. Additional possibilities of forming the sheet-like material are calendaring and/or kneading, the latter being for example performed with a Banbury mixer and a roll.

According to one or more embodiments, the temperature of forming by extruding and/or kneading and/or calendering the polymers in a sheet is 190°C or less in order to prevent the sheet from prefoaming, and to get a regular cell structure and a substantially flat foam surface. The lower limit of the temperature range is the melting point of the composition used in the method.

The formed polyolefin-based sheet may then be crosslinked according to any common technique, *i.e.,* by chemical or physical crosslinking.

Physical crosslinking may comprise using an ionizing radiation selected from the group comprising an $\alpha$-ray, a $\beta$-ray, a $\gamma$-ray, and an electron beam. According to one or more embodiments, an electron beam is used. The accelerating voltage of the ionizing radiation may depend on the thickness of the sheet to be irradiated. For example, when the thickness is from 0.1 to 5 mm, said voltage is from 400 to 1500 kV, and for example from 500 to 1100 kV, *e.g.,* from 600 to 1000 kV. The irradiation amount of the ionizing radiation is not particularly limited as long as a desired degree of crosslinking can be obtained, and is for example comprised in the range from 0.1 to 15 Mrad, *e.g.,* from 5 to 10 Mrad.

In the exemplified case illustrated in FIG. 1, crosslinking (not shown) is performed by physical crosslinking, namely via electron beam (E-beam) radiation, using a cobalt 60 source. The temperature at which crosslinking is performed may for example be comprised in the range from 20°C to 70°C. In this example, crosslinking is performed so that a certain crosslinking percentage or degree is obtained in the resulting polyolefin-based closed-cell foam. In this example, the crosslinking degree of the resulting foam may be at least 20 %, for example comprised in the range from 20 % to 70 %, for example from 30 % to 40 %, as measured according to the method described in the present description.

As shown in FIG. 1, an extruded and crosslinked polyolefin-based sheet 1 is carried toward the vertical foaming unit 2, wherein the sheet runs from top to bottom. Heaters 3 present in the vertical foaming unit 2 decompose the foaming agent in the crosslinked sheet, thereby creating closed cells in the resulting foam. The heaters 3 may for example be infrared heaters. In this example, during vertically foaming, the temperature of the heaters 3 may be comprised in the range from 150 °C to 300 °C, *e.g.,* from 150 °C to 300 °C, *e.g.,* from 200 °C to 260 °C, *e.g.,* from 200 °C to 260 °C. The temperature may be equal to or higher than the decomposition temperature of the at least one foaming agent.

In this example, the crosslinked polyolefin-based sheet 1 is vertically foamed in a continuous process, to obtain a polyolefin-based closed-cell foam 4 having a thickness comprised in the range from 0.2 mm to 5 mm and a density comprised in the range from 80 kg/m$^3$ to 250 kg/m$^3$.

The resulting polyolefin-based closed-cell foam 4 will carry substantial latent or inherent stress and residual deforming forces imparted, for example, by aspects of the production process, including but not limited to the vertical foaming step. Further, the winding of the foam into a roll form may convey deformations or imparted stress from the vertical foaming step into the roll itself, thus necessitating the ability to control, *e.g.,* among other mechanical properties, the short-term holding stress factor (feature b) and initial stress at 15 = seconds (feature d). Likewise, under such circumstances, when the foam is eventually unwound in preparation for downstream method or post-processing steps, such as application of adhesive for adhesive tape production, its unwinding may advantageously be controlled by tuning the cleavage strength holding factor of the foam 4 according to the methods of the present disclosure.

Hence, controlling selected mechanical properties of the foam may be advantageous in order to reduce the stress buildup within the foam, accumulated during the different steps of manufacture of the foam.

The foam 4 may be presented alone, or together with a coated or laminated layer. For example, the foam may be rolled with a foil making a temporary contact with the foam, thereby preventing the foam from sticking to the neighbouring foam layer when wound in a roll form. Alternatively, a polymer film and/or a polymer layer may be co-extruded and/or laminated during the forming of the above-mentioned sheet-like material. The polymer film and/or polymer layer may for example comprise LDPE and/or LLDPE and/or m-LLDPE. When a polymer layer is laminated to the sheet-like material, such a step of lamination may happen after the extrusion of the sheet-like material. When present, the step of co-extrusion or lamination happens prior to crosslinking the polyolefin-based sheet.

The foam product 4 may be used, for example, in adhesive foam tape applications, as a carrier to produce foam tapes. The foam 4 may find applications, for example, in pressure sensitive adhesive foam tapes. A foam-comprising product may comprise the foam and a pressure sensitive adhesive layer in direct and/or indirect contact with the foam.

The foam 4 may ultimately be used for the purpose of bonding in Building, Transportation (Automotive, etc), Industrial, Medical, Appliances (refrigerators, washing machine, etc) and Construction applications to name a few non-limiting examples.

II. Details concerning the measurement of relaxation times T$_2$ and ranges of components' ratios by pulsed NMR

The inventors have shown that the foam according to one or more aspects of the present disclosure may be selected in such a manner that specific hard/medium/soft components, as characterized by pulsed NMR methodology, are maintained in the foam within selected ranges of components' ratios and of related relaxation times T$_2$. Such a double selection in turn contributes to release the residual deforming forces within the foam in a controlled manner, while maintaining, for example, certain mechanical properties of the foam within selected ranges alone or in combination.

FIG. 2 is a schematic diagram of the internal structure of an example of foam according to one or more embodiments of the present disclosure. As shown in FIG. 2, the foam's internal structure comprises three components, *i.e.,* a first component L, a second component M and a third component S.

The component S is a component having a short relaxation time in a pulsed NMR measurement, and refers to a "hard" component with low molecular mobility. In contrast, the component L is a component having a long relaxation time in a pulsed NMR measurement, and refers to a "soft" component with high molecular mobility. The component M has a relaxation time in between those of the component S and the component L in a pulsed NMR measurement, and therefore has a molecular mobility in between those of the component S and the component L.

In other words, the component S substantially corresponds to the crystalline regions and crosslinked portions of the foam, while the component L corresponds to the amorphous regions of the foam, and the component M to the "interface" regions of the foam between the crystalline and amorphous regions of the foam.

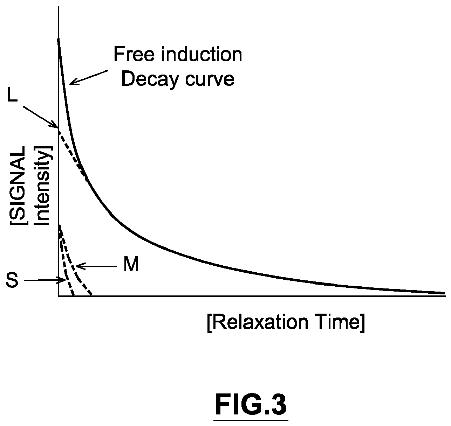

FIG. 3 is a conceptual diagram illustrating the three-component analysis of the internal structure of a foam by pulsed NMR measurement. The pulsed NMR measurement of the foam gives a free induction decay curve of $^1$H spin-spin relaxation. The obtained free induction decay curve can be waveform-separated into three curves stemming from the respective three components, *i.e.,* the hard component S, the middle component M, and the soft component L in ascending order of relaxation time. That is, the actually measured free induction decay curve may also be obtained by superimposing all three free induction decay curves derived from the above-mentioned components S, M and L.

A method of separating and analyzing the three components via pulsed NMR methodology is known, and examples of the literature include DIC Technical Review No. 12/2006, "Phase separation structure analysis of polyurethane resin by solid-state NMR (high-resolution NMR and pulsed NMR)", or document JP 2018-2983 A.

Details of an exemplary pulsed NMR measurement of a foam are provided below.

A foam sample of about 150-200 mg was rolled into a cylindrical form and introduced into a sample tube made of glass having a diameter of 10 mm (manufactured by BRUKER, item No. 1824511, diameter: 10 mm, length: 180 mm, flat bottom), such that the height was controlled to 15 mm. The sample was installed in a 20 MHz pulsed NMR apparatus ("the Minispec MQ20" manufactured by BRUKER), and retained at each target temperature for 10 minutes before beginning the measurement cycle, with the sample being removed between each measurement while adjusting the apparatus to the next temperature. With regard to particular target temperatures, the temperature was raised stepwise from -25°C, to 0°C, to 25°C, and to 40°C. The measurement conditions were:

Solid Echo method: Scans: 128~256 times; Recycle time: 1 sec (or spin lattice relaxation time T1 x 5); Acquisition scale: 1 msec; Temperature: 25°C (S, M components), 40°C (S, M components), 0°C (S, M components), -25°C (S component).

Hahn Echo method: First 90°-180°; Pulse Separation: 0.0082 msec; Final Pulse Separation: 5 msec, Number of Data Points Fitting: 100 points; Scans: 32 times; Recycle time: 1 sec (or spin lattice relaxation time T1 x 5); Temperature: 25°C, 40°C (M, L components).

The resulting free induction decay curve of $^1$H spin-spin relaxation was subjected to waveform separation into three curves derived from the above-mentioned three components S, M and L. The waveform separation was performed by fitting to both a Gaussian model and an exponential model. From the curves derived from the three components obtained in each measurement, the ratio of each component was obtained.

Using analytical software "TD-NMRA (Version 4.3, Rev. 0.8)" of BRUKER, the component S was fitted to a Gaussian model and the component M and the component L were fitted to an exponential model according to the product manual for TD-NMRA (Version 4.3, Rev. 0.8). Also, in the analysis, fitting was performed using points up to 0.6 milliseconds in the relaxation curve with respect to the Solid Echo method. With respect to the Hahn Echo method, all points were utilized for fitting.

The following equation was used in the fitting:

$$Y = s \times e^{\left(-\frac{1}{w1} \times \left(\frac{t}{T2S}\right)^{w1}\right)} + m \times e^{\left(-\frac{1}{w2} \times \left(\frac{t}{T2M}\right)^{w2}\right)} + l \times e^{\left(-\frac{1}{w3} \times \left(\frac{t}{T2L}\right)^{w3}\right)}$$

where w1 to w3 are Weibull coefficients; w1 is 2; w2 and w3 are 1; s, m and 1 are the component ratios of the component S, the component M and the component L, respectively; $T_{2S}$, $T_{2M}$ and $T_{2L}$ represent the relaxation times of the component S, the component M and the component L, respectively; and t represents time. As described above, the component S, the component M and the component L are components defined in order of increasing relaxation time in pulsed NMR measurement.

III. Details concerning the measurement of the foam's mechanical properties (above-mentioned Features a) to g))

Feature a): cleavage strength holding factor (CSHF)

The foam has a core and a skin. Feature a) defines a mechanical property related to the deformations of the foam core, and consists in measuring the elongation of the foam core, via a test designed to restrict the foam skin. The CHSF is measured via an "adhesive foam tape test", wherein the foam is combined with an adhesive film by heat lamination for example at about 108°C, and laminated to a metal substrate with this same heat. The lamination temperature should be adapted according to the foam, so that satisfactory bonding occurs without damaging the foam itself. Since the foam skin is rigidly bonded to metal substrate, the elongation occurs predominantly in the foam core.

The test setup and test substrate dimensions are provided according to the norm ASTM D1062-02. Such a test is typically used to characterize so-called structural adhesives, and was adapted to characterize the adhesive foam tapes. The test speed for CSHF and Cleavage strength measurement is 5 mm/min, and the sample's dimensions are 25mm x 25mm.

At maximum cleavage strength, the foam core has a maximum cleavage strain of 200% to 400%. According to one or more embodiments, the CSHF is comprised in the range from 0.45 to 0.7, for example from 0.5 to 0.7, for example from 0.55 to 0.70, more preferably from 0.55 to 0.67.

For the foams complying with the above defined range of 0.45 to 0.7, an alternative test may be used to measure Feature a), wherein the foam is combined with a pressure sensitive adhesive, and wherein neither the foam skin nor the foam core is restricted.

At maximum cleavage strength, the foam complex (formed by the foam and the pressure sensitive adhesive) has a maximum cleavage strain of 200% to 530%, for example from 300% to 520%, which may be higher than the foam core's maximum cleavage strain in the test described first, given the adhesive's contribution to elongation in the alternative test. According to one or more embodiments, the CSHF, when measured with said alternative test, is comprised in the range from 0.5 to 0.75, for example from 0.50 to 0.72, more preferably from 0.54 to 0.72.

In both tests described above, the CSHF amounts to:

- **CSHF** = Stress 10 min / Stress 15 seconds

Compared to the stress measured at 15 seconds with the CHSF foam core test (the test described first), the CHSF alternative test with a pressure sensitive adhesive lowers stresses at 15 seconds.

Feature b): short-term holding stress factor (HSF)

According to one or more embodiments, the short-term HSF at 25°C is comprised in the range from 0.5 to 0.78, for example from 0.60 to 0.78, more preferably from 0.62 to 0.74, when measured at t = 15 to 600 seconds, at 25°C at 100% tensile strain. The initial holding stress at t = 15 seconds for 100% tensile strain, measured at the same temperature of 25°C, is comprised in the range from 200 to 800 kPa, preferably from 300 to 700 kPa, and corresponds to Feature d).

Feature c): long-term holding stress factor (HSF)

According to one or more embodiments, the long-term HSF at 25°C is comprised in the range from 0.4 to 0.67, for example from 0.45 to 0.65, more preferably from 0.52 to 0.60, when measured at t = 15 to 28800 seconds, at 25°C at 100% tensile strain. The initial holding stress at t = 15 seconds for 100% tensile strain, measured at the same temperature of 25°C, is comprised in the range from 200 to 800 kPa, preferably from 300 to 700 kPa, and corresponds to Feature d).

Feature d): initial holding factor

According to one or more embodiments, the initial holding stress at t =15 seconds for 100% tensile strain is comprised in the range from 200 to 800 kPa is comprised in the range from 200 kPa to 800 kPa at 25°C, *e.g.,* from 300 kPa to 700 kPa. At 0°C, said initial holding stress is comprised in the range from 800 kPa to 3000 kPa, *e.g.,* from 800 kPa to 2000 kPa. At - 25°C, said initial holding stress is comprised in the range from 1700 kPa to 3000 kPa, *e.g.,* from 1700 kPa to 2500 kPa.

The conditions of the test for measuring Features b) to d) are detailed below. The method is adapted from ISO 6914:2021. However, the test conditions are adapted to the foam and involve a tensile testing equipment.

- The test is a «Foam Alone» test
- Test sample dimension: Length 185mm x Width 25mm x Thickness (foam thickness)
- Test speed 500mm/min
- The foam sample is subjected to constant strain (%) in vertical foaming direction (length direction) and Stress (kPa) is measured as a function of time (short term = 10 min, long term = 8 hours)
- **HSF** (short term) = Stress 10 min / Stress 15 seconds
- **HSF** (long term) = Stress 8 hours / Stress 15 seconds
- **Initial Stress** = Stress 15 seconds

Feature e): 180° skin peel strength

According to one or more embodiments, the 180° skin peel strength is comprised in the range from 1 N/mm to 3.5 N/mm, for example from 2.0 N/mm to 3.3 N/mm, as measured according to the method described below, which is adapted from AFERA 5001, AFERA standing for the European Adhesive Tape Association. The outer surface of the foam is subjected to a surface treatment (*e.g.,* with corona treatment or plasma treatment or fluorine gas treatment), thereby enabling anchorage of the adhesive onto the foam surface. The foam is then laminated on both sides with an adhesive, and a stiff film (*e.g.,* a 23 μm PET film) is attached on one side, while the other side is bonded onto a metal substrate. The foil together with adhesive and foam is peeled from the substrate. At some point in time the foam starts to tear/split, and then the strength is calculated. A pressure sensitive adhesive may be used in these evaluations.

Feature f): compression stress

According to one or more embodiments, the compression stress strain at 25% deflection, is comprised in the range from 30 kPa to 200 kPa; for example from 45 kPa to 115 kPa, *e.g.,* from 45 kPa to 90 kPa, as measured according to the following method. The method is adapted from ISO-3386-1, with a single layer test sample of foam (without stacking of foam samples). The test speed is between 0.5 to 5 mm/min depending on the thickness of the foam sample, with lower speeds for foams with lower thickness. For example:

- for foams with thickness up to 1mm, the test speed is 0.5mm/min;
- for foams with thickness comprised in the range from 1mm to 2.5mm, the test speed is 1.25 mm/min; and
- for foams with thickness in the range from 2.5mm to 5mm, the test speed is 2.5 mm/min.

Feature g): shrinkage of length and width

The shrinkage of length and width of the foam at storage condition of 90°C during 24 hours is comprised in the range from 0.1% to 10%, for example from 0.1% to 8%, *e.g.,* from 0.1 to 6%, as measured according to the following method. The method is adapted from ISO 2796-1986. The test takes place in a ventilated temperature oven, and does not involve any compressive load on the foam's surface. Foam samples are placed on a teflon mesh wire. Dimensional change length (roll direction) or width (along width of roll) = 100 x ((final length - initial length)/ initial length). The foam sample's length is 100mm, and its width is 100mm. The foam is a single layer foam with foam skin.

IV. Illustrative, non-limitative examples of polvolefin-based closed-cell foams - Characterization of the foams by pulsed NMR - Measurement of the foams' mechanical properties

1. Components of the polvolefin-based compositions from which the foams are obtained

Polymer resins:

- P1 is a commercial metallocene LLDPE with melt flow rate of 3 dg/min at 190°C/2.16 kg (ISO 1133).
- P2 is a commercial metallocene LLDPE with melt flow rate of 6.6 g/lOmin at 190°C/2.16 kg (ISO 1133).
- P3 is a commercial hydrogenated styrene butadiene thermoplastic elastomer with melt flow rate of 2.5 g/lOmin at 190°C/2.16 kg (ISO 1133) with a glass transition temperature peak at 19°C.
- P4 is a commercial hydrogenated vinyl-bond rich styrene ethylene ethylene propylene styrene copolymer with melt flow rate of 0.5 g/lOmin at 190°C/2.16 kg (ISO 1133) with a glass transition temperature peak at minus 32°C.
- P5 is a commercial LDPE with melt flow rate of 4.6 dg/min at 190°C/2.16 kg (ISO 1133).
- P6 is a commercial metallocene LLDPE with melt flow rate of 3.7 dg/min at 190°C/2.16 kg (ISO 1133).

Additives:

AD1 is a blend of additives expressed in wt% with respect to the total mass of the composition from which the foam is obtained. AD1 may comprise one or more of the additives listed below, and is to be combined with resins P1 to P6.

- Chemical foaming agent is used as required to get the desired density of the foam.
- Foaming agent activator is used at about 0.1-1 wt%.
- Antioxidant is used at about 0.1-0.5 wt%.
- Color pigment is used at about 0.5-2 wt%.
- Crosslinking agent is used at about 0-6 wt%
- Any polymer resin P1 to P6 may be used at about 0.01-10 wt% as masterbatch.

2. Preparation of polyolefin-based closed-cell foams

Example 1 - Foam 1r (comparative example): A commercial polymer resin P5 is mixed in an extruder with a commercial polymer resin P1. The total resin content of the mixture is 93 wt% and the weight ratio of the resins P5:P1 is 28:65, the rest being processing additives as defined above in AD1. No chemical crosslinking agent is used in this composition. After extrusion, the sheet is crosslinked by radiation with E-beam and vertically foamed to produce a sheet which is wound in the form of a roll. The amount of foaming agent used is such that a foam 1r with a density of 133 kg/m$^3$ and thickness of 1mm is obtained.

Example 2 - Foam 1a: A foam 1a is produced similarly to foam 1r as in Example 1, except that resins P1, P2 and P3 are used in the composition. The total resin content is 90 wt% and the weight ratio P1:P2:P3 is 12:49:29. The amount of foaming agent used is such that a foam 1a with a density of 142 kg/m$^3$ and thickness of 1mm is obtained.

Example 3 - Foam 1b: A foam 1b is produced similarly to foam 1r as in Example 1, except that resins P1, P2 and P3 are used in the composition. The total resin content is 92 wt% and the weight ratio P1:P2:P3 is 10:40:42. The amount of foaming agent used is such that a foam 1b with a density of 138 kg/m$^3$ and thickness of 1mm is obtained.

Example 4 - Foam 1c: A foam 1c is produced similarly to foam 1r as in Example 1, except that resins P2, P3 and P6 are used in the composition. The total resin content is 95 wt% and the weight ratio P2:P3:P6 is 39:50:6. The amount of foaming agent used is such that a foam 1c with a density of 134 kg/m$^3$ and thickness of 1mm is obtained.

Example 5 - Foam 1d: A foam 1d is produced similarly to foam 1r as in Example 1, except that resins P2, P3 and P6 are used in the composition. The total resin content is 96 wt% and the weight ratio P2:P3:P6 is 20:70:6. The amount of foaming agent used is such that a foam 1d with a density of 130 kg/m$^3$ and thickness of 1mm is obtained.

Example 6 - Foam 1e: A foam 1e is produced similarly to foam 1r as in Example 1, except that resins P1, P3 and P4 are used in the composition. The total resin content is 90 wt% and the weight ratio P1:P3:P4 is 61.4:14.3:14.3. The amount of foaming agent used is such that a foam 1e with a density of 120 kg/m$^3$ and thickness of 1mm is obtained.

Example 7 - Foam 1f: A foam 1f is produced similarly to foam 1r as in Example 1, except that resins P2, P3, P4 and P6 are used in the composition. The total resin content is 96 wt% and the weight ratio P2:P3:P4:P6 is 31:40:20:5. The amount of foaming agent used is such that a foam 1f with a density of 137 kg/m$^3$ and thickness of 1mm is obtained.

Example 8 - Foam 1g: A foam 1g is produced similarly to foam 1r as in Example 1, except that resins P2, P3, P4 and P6 are used in the composition. The total resin content is 95 wt% and the weight ratio P2:P3:P4:P6 is 20:40:30:5. The amount of foaming agent used is such that a foam 1g with a density of 131 kg/m$^3$ and thickness of 1mm is obtained.

Example 9 - Foam 1h: A foam 1h is produced similarly to foam 1r as in Example 1, except that resins P2, P3 and P6 are used in the composition. The total resin content is 95 wt% and the weight ratio P2:P3:P6 is 20:70:5. The amount of foaming agent used is such that a foam 1h with a density of 132 kg/m$^3$ and thickness of 2.4mm is obtained.

3. Pulsed-NMR characterization of the foams la-lh and 1r

Example 10: The foams produced as in Examples 1-9, are characterized according to Pulsed NMR using the Hahn echo method at a temperature of +25°C. The component ratios s, m, 1 of the relative components S, M and L are expressed in percent (%), and their related relaxation times $T_2$ in milliseconds. The evaluation method is provided in part I. of the present description. The results are summarized as in Table A1 below:

Table A1

| Foam | Component S | | Component M | | Component L | |
|------|-------|-------------|-------|-------------|-------|-------------|
|      | s (%) | $T_{2S}$ (msec) | m (%) | $T_{2M}$ (msec) | l (%) | $T_{2L}$ (msec) |
| 1a | 20.1 | 0.022011 | 64.7 | 0.045628 | 15.2 | 0.228885 |
| 1b | 17.9 | 0.019666 | 67.8 | 0.038395 | 14.3 | 0.204309 |
| 1c | 22.4 | 0.019352 | 66.3 | 0.037103 | 11.3 | 0.200986 |
| 1d | 26.1 | 0.018537 | 67.1 | 0.032901 | 6.8 | 0.204171 |
| 1e | 10.6 | 0.022191 | 58.9 | 0.046058 | 30.5 | 0.223412 |
| 1f | 19.6 | 0.020776 | 55.1 | 0.043662 | 25.3 | 0.209946 |
| 1g | 20.5 | 0.019623 | 50.9 | 0.046828 | 28.7 | 0.213049 |
| 1h | 29.5 | 0.018004 | 64.7 | 0.034826 | 5.7 | 0.227319 |
| 1r | 18.7 | 0.027019 | 60.4 | 0.056095 | 20.9 | 0.235984 |

Example 11: The foams produced as in Examples 1-9, are characterized according to Pulsed NMR using the Solid echo method at a temperature of +25°C. The component ratios s, m, 1 of the relative components S, M and L are expressed in percent (%), and their related relaxation times $T_2$ in milliseconds. The evaluation method is provided in part I. of the present description. The results are summarized as in Table A2 below:

Table A2

| Foam | Component S | | Component M | | Component L | |
|------|-------|-------------|-------|-------------|-------|-------------|
|      | s (%) | $T_{2S}$ (msec) | m (%) | $T_{2M}$ (msec) | l (%) | $T_{2L}$ (msec) |
| 1a | 34.9 | 0.009392 | 51.7 | 0.032635 | 13.4 | 0.152574 |

(continued)

| Foam | Component S | | Component M | | Component L | |
|---|---|---|---|---|---|---|
| | s (%) | $T_{2S}$ (msec) | m (%) | $T_{2M}$ (msec) | l (%) | $T_{2L}$ (msec) |
| 1b | 36.6 | 0.009867 | 51.2 | 0.030782 | 12.2 | 0.147 |
| 1c | 40.0 | 0.010074 | 50.1 | 0.029153 | 9.9 | 0.138704 |
| 1d | 45.9 | 0.010812 | 47.5 | 0.02634 | 6.6 | 0.135533 |
| 1e | 27.0 | 0.009456 | 47.5 | 0.03885 | 25.4 | 0.181396 |
| 1f | 33.2 | 0.010258 | 42.8 | 0.03301 | 24.0 | 0.165616 |
| 1g | 31.5 | 0.010442 | 39.0 | 0.034454 | 29.5 | 0.170027 |
| 1h | 47.2 | 0.010867 | 46.7 | 0.026549 | 6.1 | 0.138343 |
| 1r | 30.7 | 0.008868 | 52.6 | 0.037516 | 16.6 | 0.163499 |

Example 12: The foams produced as in Examples 1-9, are characterized according to Pulsed NMR using the Solid echo method at a temperature of 0°C. The component ratios s, m, 1 of the relative components S, M and L are expressed in percent (%), and their related relaxation times $T_2$ in milliseconds. The evaluation method is provided in part I. of the present description. The results are summarized as in Table A3 below:

Table A3

| Foam | Component S | | Component M | | Component L | |
|---|---|---|---|---|---|---|
| | s (%) | $T_{2S}$ (msec) | m (%) | $T_{2M}$ (msec) | (%) | $T_{2L}$ (msec) |
| 1a | 51.1 | 0.008989 | 43.9 | 0.026993 | 5.0 | 0.138176 |
| 1b | 55.8 | 0.009327 | 39.5 | 0.025741 | 4.7 | 0.132725 |
| 1c | 60.4 | 0.009465 | 36.8 | 0.025273 | 2.8 | 0.148764 |
| 1d | 69.2 | 0.009812 | 28.9 | 0.021781 | 1.9 | 0.158059 |
| 1e | 39.8 | 0.009116 | 52.0 | 0.027717 | 8.1 | 0.125796 |
| 1f | 51.8 | 0.009841 | 45.1 | 0.024328 | 3.1 | 0.132875 |
| 1g | 52.3 | 0.010087 | 45.3 | 0.024682 | 2.4 | 0.146525 |
| 1h | 70.2 | 0.009895 | 27.6 | 0.02155 | 2.3 | 0.142228 |
| 1r | 40.0 | 0.008322 | 52.5 | 0.028189 | 7.6 | 0.132383 |

Example 13: The foams produced as in Examples 1-9, are characterized according to Pulsed NMR using the Solid echo method at a temperature of -25°C. The component ratios s, m, 1 of the relative components S, M and L are expressed in percent (%), and their related relaxation times $T_2$ in milliseconds. The evaluation method is provided in part I. of the present description. The results are summarized as in Table A4 below:

Table: A4

| Foam | Component S | | Component L | |
|---|---|---|---|---|
| | s (%) | $T_{2S}$ (msec) | l (%) | $T_{2L}$ (msec) |
| 1a | 68.4 | 0.008901 | 31.6 | 0.019117 |
| 1b | 72.0 | 0.00911 | 28.0 | 0.018768 |
| 1c | 74.4 | 0.009166 | 25.6 | 0.018292 |
| 1d | 81.3 | 0.00944 | 18.7 | 0.017164 |
| 1e | 64.7 | 0.009052 | 35.3 | 0.020483 |
| 1f | 75.3 | 0.009347 | 24.7 | 0.017715 |
| 1g | 78.2 | 0.009462 | 21.8 | 0.017455 |
| 1h | 81.6 | 0.009464 | 18.4 | 0.016981 |
| 1r | 60.4 | 0.008484 | 39.6 | 0.019867 |

4. Measurement of the mechanical properties of foams la-lh and 1r

The aforementioned mechanical properties a) to g) of the foams produced in the Examples 1-9 are measured according to the methods described in Part III of the present description.

Example M1: The foams 1r, 1a, 1b, 1c, Id, 1e, 1f and 1g as produced in the aforementioned examples are evaluated for their mechanical properties.

L-HSF-8 in Tables M1a and M1b refers to the long-term holding stress factor (HSF) at 25°C (as described in Feature c), while S-HSF-10a refers to the test short-term holding stress factor (HSF) at 25°C (as described in Feature b).

Table M1a

| Property | 1r | 1a | 1b | 1c | 1d |
|---|---|---|---|---|---|
| L-HSF-8 | 0.69 | 0.63 | 0.59 | 0.57 | 0.49 |
| S-HSF-10a | 0.8 | 0.75 | 0.72 | 0.7 | 0.64 |

Table M1b

| Property | 1e | 1f | 1g |
|---|---|---|---|
| L-HSF-8 | 0.64 | 0.56 | 0.52 |
| S-HSF-10a | 0.77 | 0.7 | 0.65 |

Example M2: The foams 1r, 1b, 1c, Id, 1e, 1f and 1g as produced in the aforementioned examples are evaluated for their mechanical properties.

S-HSF-10b in Tables M2a and M2b refers to the short-term holding stress factor (HSF) as in Example M1, however measured at 0°C.

Table M2a

| Property | 1r | 1b | 1c | 1d |
|---|---|---|---|---|
| S-HSF-10b | 0.75 | 0.56 | 0.6 | 0.56 |

Table M2b

| Property | 1e | 1f | 1g |
|---|---|---|---|
| S-HSF-10b | 0.63 | 0.57 | 0.54 |

Example M3: The foams 1r, 1b, 1c, 1e, 1f and 1g as produced in the aforementioned examples are evaluated for their mechanical properties.

S-HSF-10c in Tables M3a and M3b refers to the short-term holding stress factor (HSF) as in example M1, but measured at -25°C.

Table M3a

| Property | 1r | 1b | 1c |
|---|---|---|---|
| S-HSF-10c | 0.78 | 0.7 | 0.7 |

Table M3b

| Property | 1e | 1f | 1g |
|---|---|---|---|
| S-HSF-10c | 0.7 | 0.64 | 0.63 |

Example M4: The foams 1r, 1a, 1b, 1c, Id, 1e, 1f and 1g as produced in the aforementioned examples are evaluated for their mechanical properties.

IHS15 - L-HSF-8 in Tables M4a and M4b refers to the initial holding stress in kPa at 25°C as described in Feature d) and in relation to long-term holding stress factor as described in Feature c).

IHS15 - S-HSF-10a in Tables M4a and M4b refers to the initial holding stress in kPa at 25°C as described in Feature d) and in relation to short-term holding stress factor as described in Feature b).

Table M4a

| Property | 1r | 1a | 1b | 1c | 1d |
|---|---|---|---|---|---|
| IHS15 - L-HSF-8 | 846 | 724 | 606 | 647 | 422 |
| IHS15 - S-HSF-10a | 846 | 724 | 606 | 647 | 422 |

Table M4b

| Property | 1e | 1f | 1g |
|---|---|---|---|
| IHS15 - L-HSF-8 | 485 | 537 | 462 |
| IHS15 - S-HSF-10a | 485 | 537 | 462 |

Example M5: The foams 1r, 1b, 1c, Id, 1e, 1f and 1g as produced in the aforementioned examples are evaluated for their mechanical properties.

IHS15 - S-HSF-10b in Tables M5a and M5b refers to the initial holding stress in kPa at 0°C as described in Feature d) and in relation to short-term holding stress factor as described in Feature b).

Table M5a

| Property | 1r | 1b | 1c | 1d |
|---|---|---|---|---|
| IHS15 - S-HSF-10b | 1121 | 1249 | 1437 | 1529 |

Table M5b

| Property | 1e | 1f | 1g |
|---|---|---|---|
| IHS15 - S-HSF-10b | 985 | 1245 | 1115 |

Example M6: The foams 1r, 1b, 1c, 1e, 1f and 1g as produced in the aforementioned examples are evaluated for their mechanical properties.

IHS15 - S-HSF-10c in Tables M6a and M6b refers to the initial holding stress in kPa at -25°C as described in Feature d) and in relation to short-term holding stress factor as described in Feature b).

Table M6a

| Property | 1r | 1b | 1c |
|---|---|---|---|
| IHS15 - S-HSF-10c | 1644 | 2039 | 2273 |

Table M6b

| Property | 1e | 1f | 1g |
|---|---|---|---|
| IHS15 - S-HSF-10c | 1545 | 2123 | 1915 |

Example M7: The foams 1r, 1a, 1b, 1c, 1e and 1f as produced in the aforementioned examples are evaluated for their mechanical properties at 25°C.

With reference to Table M7, SPS refers to 180° skin peel strength in N/mm as described in Feature e) and measured with a hotmelt pressure sensitive adhesive. DF refers to the density of foam in kg/m$^3$. CS25 refers to the compression stress in kPa as described in Feature f).

Table M7

| Property | 1r | 1a | 1b | 1c | 1e | 1f |
|---|---|---|---|---|---|---|
| SPS | 2.9 | 1.85 | 3.1 | 3.2 | 2.4 | 2.4 |
| DF | 133 | 142 | 138 | 134 | 120 | 137 |
| CS25 | 118 | 128 | 95 | 91 | 50 | 70 |

Example M8: The foams 1r, 1a, 1b, 1c, 1f and 1e as produced in the aforementioned examples are evaluated as follows: SLW24 in Table M8 refers to the shrinkage of length and width of the foam according to the test method described in Feature g).

Table M8

| Property | 1r | 1a | 1b | 1c | 1e | 1f |
|---|---|---|---|---|---|---|
| SLW24 | 2 | 2.4 | 3.1 | 4 | 7.3 | 7 |

Example M9: The foams 1r, 1a, 1b, 1c, Id, 1e, 1f and 1g as produced in the aforementioned examples are evaluated as follows: CSHF-FC in Tables M9a and M9b refers to the cleavage strength holding factor of the foam core according to the test method described in Feature a). MCSMS-FC in Tables M9a and M9b refers to the maximum cleavage strain in percentage, at maximum cleavage strength of the foam core according to the test method described in Feature a).

Table M9a

| Property | 1r | 1a | 1b | 1c | 1d |
|---|---|---|---|---|---|
| CSHF-FC | 0.76 | 0.668 | 0.62 | 0.59 | 0.5 |
| MCSMS-FC | 284 | 297 | 253 | 352 | 287 |

Table M9b

| Property | 1e | 1f | 1g |
|---|---|---|---|
| CSHF-FC | 0.741 | 0.614 | 0.586 |
| MCSMS-FC | 335 | 352 | 361 |

Example M10: The foams 1a, 1b, Id, Id, 1e and 1g as produced in the aforementioned examples are evaluated as follows: CSHF-FPSA in Table M10 refers to the cleavage strength holding factor of the foam together with pressure sensitive adhesive according to the alternative test method described in Feature a).

Table M10

| Property | 1a | 1b | 1c | 1d | 1e | 1g |
|---|---|---|---|---|---|---|
| CSHF-FPSA | 0.68 | 0.7 | 0.68 | 0.56 | 0.68 | 0.67 |

5. Analysis of foams la-lh and 1r in processing, post-processing and end-use applications

In comparison with comparative foam 1r, the foams 1a-1h give a more satisfactory balance of one or more of the mechanical properties measured as above in part IV.4 of the present description, which turns out to be advantageous for controlling their response to a stress they may be subject to during their manufacture and/or post-manufacture steps and/or end-applications, for example for foam tape applications.

The examples or embodiments described in this disclosure are illustrative and non-limiting, and a person skilled in the art may easily, in view of this disclosure, modify these examples or embodiments, or consider others, while remaining within the scope of the invention.

In particular, a person skilled in the art will be able to devise variations comprising only some of the features of the previously described examples or embodiments, if these features alone are sufficient to provide one of the advantages of the invention. Furthermore, the various features of these examples or embodiments may be used alone or combined with each other. When combined, these features may be combined as described above or differently, as the invention is not limited to the specific combinations described herein. In particular, unless otherwise specified, a feature described in connection with one example or embodiment may be similarly applied to another example or embodiment.

**Claims**

1. A polyolefin-based closed-cell foam, the foam being shaped as a sheet having a thickness comprised in the range from 0.2 mm to 5 mm,

   wherein the foam comprises a polyolefin composition comprising a first component (L) having a first relaxation time, $T_{2L}$;
   $T_{2L}$ is comprised in the range from 0.190 ms to 0.229 ms as measured by the pulsed NMR Hahn echo method at 25°C; and
   the first component (L) is present in a first component ratio (1) of at least 5 %, as measured by the pulsed NMR Hahn echo method at 25°C.

2. The polyolefin-based closed-cell foam according to claim 1, wherein the foam has a density comprised in the range from 80 kg/m$^3$ to 250 kg/m$^3$.

3. The polyolefin-based closed-cell foam according to claim 1 or claim 2, further comprising a second component (M) having a second relaxation time, $T_{2M}$, and optionally a third component (S) having a third relaxation time, $T_{2S}$, wherein each of $T_{2M}$ and $T_{2S}$ is lower than $T_{2L}$.

4. The polyolefin-based closed-cell foam according to claim 3, wherein the second component (M) is present in a second component ratio (m) comprised in the range from 40 % to 70 % and the third component (S), when present, is present in a third component ratio (s) comprised in the range from 60 % to 90 %, and
   wherein the second component ratio (m) is measured by the pulsed NMR Hahn echo method at +25°C, and the third component ratio (s) is measured by the pulsed NMR Solid echo method at -25°C.

5. The polyolefin-based closed-cell foam according claim 1 or claim 2, further comprising a second component (M) having a second relaxation time, $T_{2M}$, and optionally a third component (S) having a third relaxation time, $T_{2S}$, wherein:

   $T_{2M}$ is comprised in the range from 0.03 ms and 0.05 ms; and/or
   the second component (M) is present in a second component ratio (m) comprised in the range from 40 % to 70 %;
   $T_{2S}$ is at least 0.0088 ms; and/or
   the third component (S), when present, is present in a third component ratio (s) comprised in the range from 60 % to 90 %;
   wherein each of $T_{2M}$ and the second component ratio (m) are measured by the pulsed NMR Hahn echo method at +25°C, and each of $T_{2S}$ and the third component ratio (s) are measured by the pulsed NMR Solid echo method at -25°C.

6. The polyolefin-based closed-cell foam according to any one of claims 3-5, wherein:

   $T_{2S}$ is at least 0.0088 ms; and/or
   the third component (S) is present in a third component ratio (s) comprised in the range from 50 % to 85 %;
   wherein each of $T_{2S}$ and the third component ratio (s) are measured by the pulsed NMR Solid echo method at 0°C.

7. The polyolefin-based closed-cell foam according to any one of the preceding claims, wherein the foam is obtained by crosslinking a polyolefin composition and vertically foaming the crosslinked polyolefin composition into a polyolefin-based sheet.

8. The polyolefin-based closed-cell foam according to claim 7, wherein the crosslinking percentage of the foam is comprised in a range from 20 % to 70 % as determined according to the method described in the present description.

9. The polyolefin-based closed-cell foam according to any one of the preceding claims, wherein the foam is obtained from a composition comprising:

a first polymer resin present in a first mass fraction, x, with respect to the total mass of polymer resin comprised in said composition, the first polymer resin comprising a polyolefin;
a second polymer resin present in a second mass fraction, y, with respect to the total mass of polymer resin comprised in said composition, the second polymer resin comprising a thermoplastic elastomer;
at least one foaming agent; and
optionally, at least one additive;
wherein x is comprised between 20 and 60 wt% and y is comprised between 29 and 70 wt%.

10. The polyolefin-based closed-cell foam according to claim 9, wherein the composition further comprises an additive used as masterbatch, the additive comprising a polyolefin equal to or distinct from the polyolefin of the first polymer resin.

11. The polyolefin-based closed-cell foam according to claim 9 or claim 10, wherein the composition further comprises a third polymer resin present in a third mass fraction, z, with respect to the total mass of polymer resin comprised in said composition, the third polymer resin comprising a thermoplastic elastomer, and wherein:

- x is comprised between 20 and 50 wt%;
- y is comprised between 29 and 70 wt%;
- z is comprised between 14 and 40 wt%.

12. The polyolefin-based closed-cell foam according to any one of the preceding claims, having one or more of the following properties:

a) cleavage strength holding factor (CSHF) at 25°C, at 100% cleavage strain of foam core, is comprised in the range from 0.45 to 0.7 (at t =15 to 600 seconds), wherein the foam core has a maximum cleavage strain of 200% to 400% at maximum cleavage strength, as measured according to the method described in the present description.
b) short-term holding stress factor (HSF) at 25°C at 100% tensile strain is comprised in the range from 0.5 to 0.78 (at t = 15 to 600 seconds), wherein the initial holding stress at t = 15 seconds for 100% tensile strain is comprised in the range from 200 to 800 kPa, as measured according to the method described in the present description.
c) long-term holding stress factor (HSF) at 25°C at 100% tensile strains is comprised in the range from 0.4 to 0.67 (at t = 15 to 28800 seconds), wherein the initial holding stress at t =15 seconds for 100% tensile strain is comprised in the range from 200 to 800 kPa, as measured according to the method described in the present description.
d) initial holding stress at t = 15 seconds for 100% tensile strain, is comprised in the range from 200 kPa to 800 kPa at 25°C; from 800 kPa to 3000 kPa at 0°C; from 1700 kPa to 3000 kPa at -25°C, as measured according to the method described in the present description.
e) 180° skin peel strength of 1 N/mm to 3.5 N/mm, as measured according to the method described in the present description.
f) compression stress strain 25%, is comprised in the range from 30 to 200 kPa, as measured according to the method described in the present description.
g) shrinkage of length and width at storage condition of 90°C during 24 hours is comprised in the range from 0.1% to 10%, as measured according to the method described in the present description.

13. Use of the polyolefin-based closed-cell foam according to any one of the preceding claims, for controlling a response of the foam to a stress the foam is subject to during the manufacture and/or post-manufacture steps and/or end-applications of the foam.

14. Method for manufacturing a polyolefin-based closed-cell foam comprising:

providing a polyolefin composition;
blending the polyolefin composition with at least one foaming agent;
forming a sheet, wherein the blending of the polyolefin composition with the at least one foaming agent is performed prior to and/or simultaneously with the forming;

crosslinking the sheet to at least 20 %; and
foaming the crosslinked sheet at a predetermined temperature to obtain a polyolefin-based closed-cell foam shaped as a sheet having a thickness comprised in the range from 0.2 mm to 5 mm.

15. The method of claim 14, wherein the foaming is performed on a vertically arranged crosslinked sheet.

**FIG.1**

**FIG.2**

FIG.3

Europäisches
Patentamt

European
Patent Office

Office européen
des brevets

**EUROPEAN SEARCH REPORT**

Application Number

EP 21 18 6777

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 604 412 A1 (SEKISUI CHEMICAL CO LTD [JP]) 5 February 2020 (2020-02-05) * paragraphs [0007] - [0011], [0023] - [0043], [0049]; examples 1-3 * ----- | 1-15 | INV. C08J9/00 |
| X | US 9 260 577 B2 (SIERADZKI PAWEL [US]; BALDWIN JESSE J [US] ET AL.) 16 February 2016 (2016-02-16) * examples 1-5 * ----- | 1-15 | |
| X | WO 2015/152222 A1 (SEKISUI CHEMICAL CO LTD [JP]) 8 October 2015 (2015-10-08) * paragraphs [0050] - [0052]; examples 1-3 * ----- | 1-15 | |
| A | EP 3 005 897 A1 (ASICS CORP [JP]) 13 April 2016 (2016-04-13) * paragraphs [0011] - [0013], [0077] - [0080], [0088] - [0092] * * examples 1-1, 2-1, 2-2; tables 1, 3 * ----- | 1-15 | |

TECHNICAL FIELDS
SEARCHED      (IPC)

C08J

The present search report has been drawn up for all claims

| Place of search | Date of completion of the search | Examiner |
|---|---|---|
| The Hague | 7 January 2022 | Mayer, Anne |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
...................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 21 18 6777

This annex lists the patent family members relating to the patent documents cited in the above-mentioned European search report.
The members are as contained in the European Patent Office EDP file on
The European Patent Office is in no way liable for these particulars which are merely given for the purpose of information.

07-01-2022

| Patent document cited in search report | | Publication date | Patent family member(s) | | Publication date |
|---|---|---|---|---|---|
| EP 3604412 | A1 | 05-02-2020 | CN | 110475811 A | 19-11-2019 |
| | | | EP | 3604412 A1 | 05-02-2020 |
| | | | JP | WO2018182034 A1 | 06-02-2020 |
| | | | KR | 20190129895 A | 20-11-2019 |
| | | | US | 2021102037 A1 | 08-04-2021 |
| | | | WO | 2018182034 A1 | 04-10-2018 |
| US 9260577 | B2 | 16-02-2016 | US | 2011014835 A1 | 20-01-2011 |
| | | | US | 2016102186 A1 | 14-04-2016 |
| | | | WO | 2011008845 A1 | 20-01-2011 |
| WO 2015152222 | A1 | 08-10-2015 | CN | 106133040 A | 16-11-2016 |
| | | | CN | 110256746 A | 20-09-2019 |
| | | | JP | 6469085 B2 | 13-02-2019 |
| | | | JP | WO2015152222 A1 | 13-04-2017 |
| | | | KR | 20160140648 A | 07-12-2016 |
| | | | WO | 2015152222 A1 | 08-10-2015 |
| EP 3005897 | A1 | 13-04-2016 | AU | 2014271637 A1 | 21-01-2016 |
| | | | EP | 3005897 A1 | 13-04-2016 |
| | | | US | 2016113354 A1 | 28-04-2016 |
| | | | WO | 2014192145 A1 | 04-12-2014 |
| | | | WO | 2014192910 A1 | 04-12-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018002983 A

**Non-patent literature cited in the description**

- *CHEMICAL ABSTRACTS,* 26221-73-8
- *CHEMICAL ABSTRACTS,* 66070-58-4
- *CHEMICAL ABSTRACTS,* 132778-07-5